Europäisches Patentamt

European Patent Office

Office européen des brevets

(19)

(11) Publication number: 0 382 672
A2

# EUROPEAN PATENT APPLICATION

(12)

(21) Application number: 90500011.3

(51) Int. Cl.5: **B23B 39/00**

(22) Date of filing: 06.02.90

(30) Priority: 08.02.89 ES 8900454

(43) Date of publication of application:
16.08.90 Bulletin 90/33

(84) Designated Contracting States:
AT BE CH DE FR GB GR IT LI LU NL SE

(71) Applicant: Gregorio Gracia, Oscar Rodolfo
Rio Manzanares, 31 bajo B
E-28913 Leganes (Madrid)(ES)

(72) Inventor: Gregorio Gracia, Oscar Rodolfo
Rio Manzanares, 31 bajo B
E-28913 Leganes (Madrid)(ES)

(74) Representative: De la Fuente Fernandez,
Dionisio
Europatent, S.A. Santa Engracia num. 4-5
E-28010 Madrid(ES)

(54) **Template Boring Machine.**

(57) IMPROVEMENTS IN TEMPLATE BORING MA-
CHINES, formed because they leave the platform
fixed and the bit with an up and down movement, by
means of a circuit with various multivibrators con-
nected to one another by different relay sections,
allowing movement of the rotating motors and lift
and fall of the bit; automatic cycle repeat, by means
of end of stroke micro-switches designed in the lift
and fall motor; acoustic means coupled to warn of
end of cycle, and time constant device, for automatic
cycle performance, and adjustment of bit, by im-
movilizing the rotating motor of the bit, and lift move-
ment of the bit to a maximum position, where it is
set, returning to automatic performance when a hand
switch is pressed.

EP 0 382 672 A2

## STATE OF THE ART.

Template boring machines which are used today present the features of a fixed boring and table designed with upward and downward movement, so that the boring appears on the surface of the table when the board drops, or is concealed when it goes up, leaving it to the operator to achieve accuracy in the job he is performing.

Furthermore, with the boring machines that are now employed, a reference is used to locate the point which is to be bored, on the upper side of the template, and this reference is based on a luminous point which incides on that of the boring, emitting a ray of light from a fixed emitter located in a place on the work table; this requires the use of a light which is not too powerful in order to eliminate the likelihood of overheating, owing to the length of time the job lasts, with the consequent replacements of fused light bulbs.

Improvements in template boring machines referred to in this Description basically consist of making the board where the template is located firm, so that the bit performs the corresponding up and down movements to achieve top precision bore holes, using mechanical and electronic devices, permitting both a drill rotating movement and an up and down movement, with very accurate measurements, and in addition allowing for the possibility of an automatic performance when a previously fixed sequence is repeated, by simply varying the position of the template.

A system for illuminating the point that is to be sited has furthermore been devised, using a very powerful lamp, fitted to an optical system which conveys the beam that is emitted to the exact point, without having to place this light vertically over that point, with the consequent possibility of being able to use more powerful lamps which are fitted inside the boring machine unit, and are suitably aired and ventilated to make them last longer.

The above improvements consist basically of creating a circuit which is supplied from the mains, using a system of transformers, where two motors are coupled, one to turn the bit and the other, by suitable reducers, to achieve an up and down movement in it. These motors are inserted in the circuit through control relays, which are suitably activated by the switch which starts up the system, and which make the rotating motor run at the same time as the motor that has the upward movement, which is designed with end of stroke two-way limiter micro-switches which restrict the movement of the bit in these directions at the suitable moments.

In addition to these motors, optical and acoustic warning devices have been designed, to inform the operator when the complete cycle is over, and also automatic devices, for a process repeat performance, without having to push the starter knob again.

In this main circuit, other means for starting up the set light lamp have also been devised, which is included in the unit and via an optical system conveys its light beam to the upright setting of the point that is to be bored, remaining alight for as long as its use is required and which automatically goes out when the job is finished; it lights up again when the light reset switch is pressed.

Devices are also included to adjust the bit, leaving it free of rotating movement with only an up/down movement, to obtain the suitable precision in each case.

A detailed description of the above-mentioned improvements is given below, referring to the drawings which are appended hereto and where a preferent, but in no way a restrictive form of execution is shown as an example, and open to any variations in detail which do not represent a fundamental change in its basic features.

The following aspects are shown in the drawings:

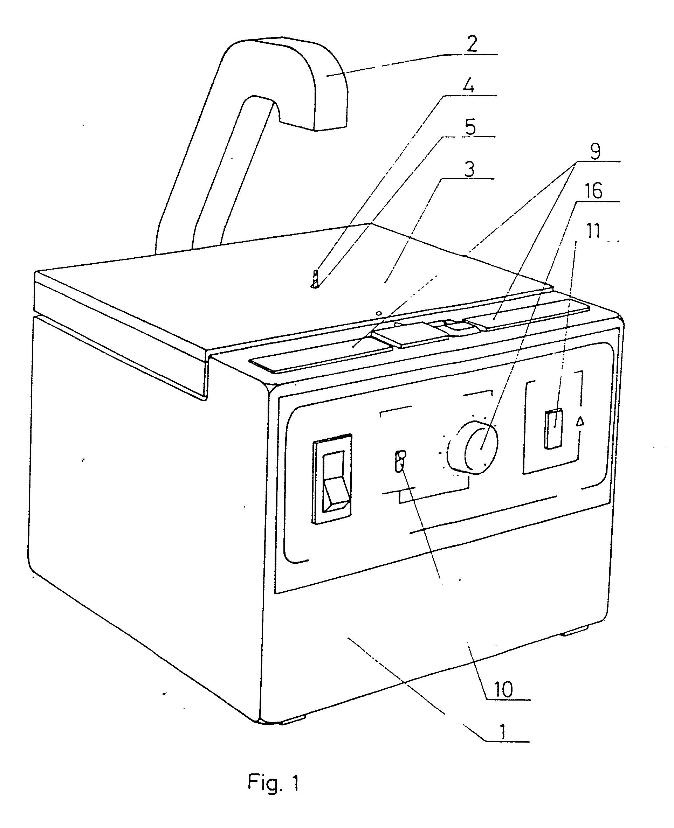

In figure 1: General view of the external unit.

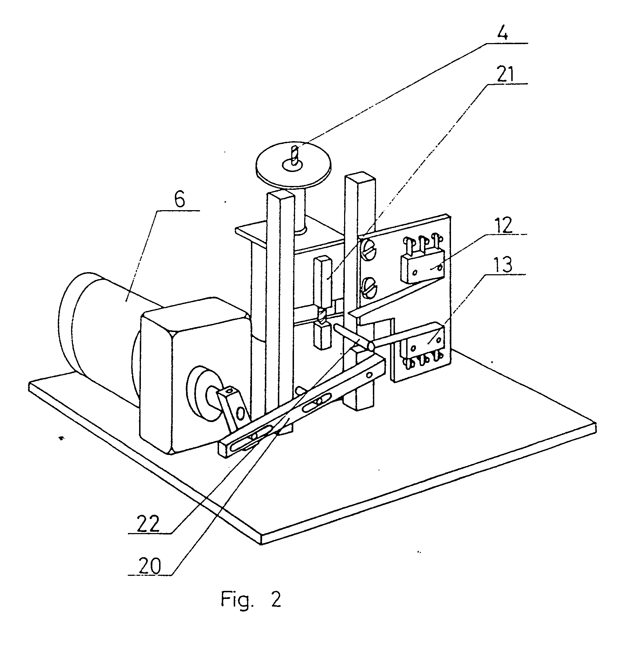

In figure 2: Internal diagramatic view of the mechanical system of the rise and fall movement of the bit.

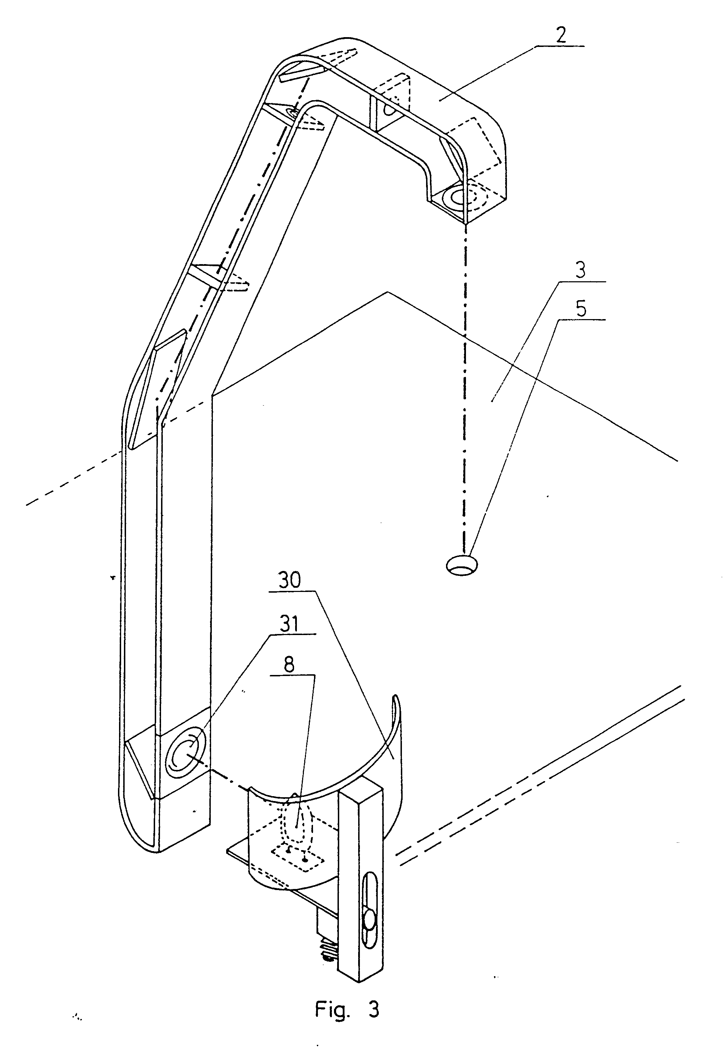

In figure 3: Diagramatic view of the set light system.

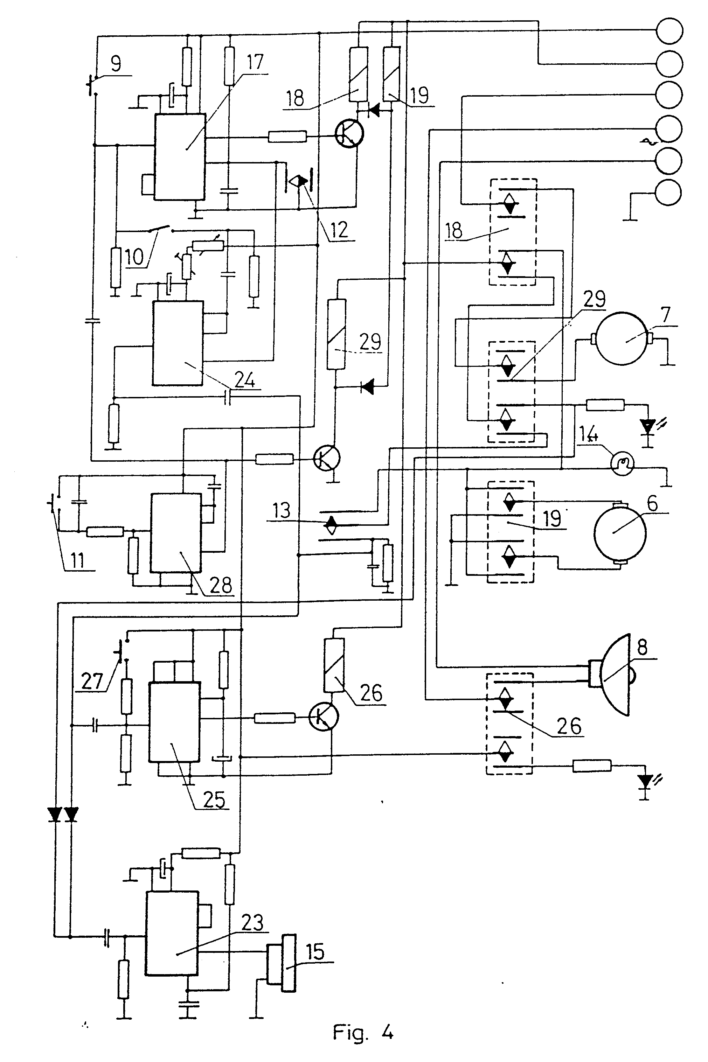

In figure 4: General circuit of the improvements.

According to the example of execution which is shown herein, the improvements in template boring machines which are now proposed consist of creating an assembly formed by an outer casing (1) with a firm upper platform (3), and a periscope system (2) for the set light; in the front of this casing are the manual or automatic (10) starter controls, time (16) controls and bit adjustment control (11) such that from this front position all work instructions can be performed for the different operations.

The start control (9) operates on the entrance of a multivibrator (17) which works on relays (18 and 19) where the first (18) start up the boring motor (7) whilst the other relay works on the motor (6) which by a mechanical cam and lever (20) system makes an intermediary unit (21) lift, which is graded in length, and which in turn supplies the upward movement of the bit (4). This system of levers has a shaft (22) which in the upward movement contacts a micro-switch (12) which restricts that upward movement, cutting the inverted movement and making the bit come down, until a shank (22) works on another micro-switch (13) which limits the fall, whereupon the motor (6) is detained.

At the same time, when the inverted motor movement takes place(6) the motor is stopped (7) and relays (18 and 19) are idle, and another multivibrator is worked (23) whose exit is linked with a piezoelectric buzzer (15) which emits a tone for a length of time marked by the potentiometer (16) to alert that the complete cycle has concluded. This same impulse also works on the inlet of another multivibrator (24) whose inverted outlet drops in level whilst the time period set potentiometer works, and at the end of this period of time, its upper side, if the automatic switch (10) is off, produces an activation of the first multivibrator (17) thus reinitiating the described movement of motors, and the full cycle is once more repeated.

Furthermore, the pulse originated in the microswitch (13) also works on the inlet of another multivibrator (25) which keeps the relay (26) activated and this turns on the light (8) of the fixture light column. Once the above-mentioned time has elapsed, without a new pulse coming, the relay (26) is turned off and the light goes out, and will not come on again until the light reset switch (27) is worked which has access to the multivibrator inlet (25).

In order to adjust the bit, without this turning, there is a knob (11) which works on a divider (28) which in turn works on the first multivibrator (17) and activates the relays (18 and 19) and at the same time activates another relay (29) which prevents the boring motor from turning, thus producing an upward movement of same but without turning, in order to adjust the height and consequently the depth of the boring on the template which is placed on the platform (3).

This setting remains static, whilst the regulator (21) is worked to place the bit in the required position, and when the bit adjustment knob (11) is pressed once more, the relays (29 and 19) are deactivated thus completing the downward cycle to its original bottom idle setting.

To achieve the setting light without power limitations, there is a bulb (8) placed in front of a reflector (30) which concentrates the light beam and directs it towards a lens (31) in the lower area of the periscope (2), inside which and through the corresponding optical corner mirror means and lenses it is conveyed to the upright of the orifice (5) where the bit is visible, and by this light point which is perfectly sited on the template, we get the exact spot where the bit is located underneath.

The improvements which have been described are organized in this way and all the template boring operations are performed in a simple and automatic manner, and once the automatic control is set, the operator will simply vary the position of the template, for the time established in the flow lag control (16), and at the end of each cycle will receive the corresponding tone to set the template in its new position again.

The advantages which are obtained from these drives are quite clear and readily understood, because since the platform is firm and the drill is mobile, and also the adjustment of the bit can be easily adapted to the needs of each specific moment, this allows the operator to simply worry about fitting the template in the place marked by the setting light.

The shape, materials and dimensions may be variable and also, generally, any accessory and secondary aspect, so long as this does not alter, change or modify the basic features of the improvements which have been described.

## Claims

1.- IMPROVEMENTS IN TEMPLATE BORING MACHINES, characterised because there are two independent motors, one for the turning movement of the bit and the other to obtain an up and down movement in same, by a rod and lever mechanism which works on a component which can be graded in height, all being included in the same unit, where there is a fixed upper platform, with a central orifice for the passage of the bit, and front with the corresponding controls; in this same unit there is a column in the form of periscope which, by means of interior optical systems, conveys the beam of light from an interior light bulb to the upright coinciding with the bit, as light for setting the template which is to be drilled.

2.- IMPROVEMENTS IN TEMPLATE BORING MACHINES, in accordance with claim one, characterised because there is a circuit designed for the control of the unit, formed by a starter knob, which starts up a multivibrator which excites two relays, which in turn put each motor into motion, causing the bit to turn simultaneously as it goes up; in this circuit there are end of stroke micro-switches, and one of them, when the bit reaches its highest point, makes the multivibrator stop the bit movement, and reverts the direction of the elevation motor so that it drops down to its lowest position, where it works on the second end of stroke microswitch, detaining the corresponding motor.

3.- IMPROVEMENTS IN TEMPLATE BORING MACHINES, in accordance with claims 1 and 2, characterised because there is another multivibrator in the circuit which operates when the movement of the lift and drop motor stops, working on an acoustic means with piezo-electric buzzer which announces the end of the cycle.

4.- IMPROVEMENTS IN TEMPLATE BORING MACHINES, in accordance with claims 1 to 3, characterised because there is another multivibrator in the circuit, which has a closure switch for automatic setting, which jointly with the acoustic means, comes into service via a potentiometer which regulates a time constant, so that the first multivibrator automatically comes into service again, reactivating the respective relays, to repeat the cycle as many times as necessary.

5.- IMPROVEMENTS IN TEMPLATE BORING MACHINES, in accordance with claims 1 to 4, characterised because another multivibrator is foreseen, which can be worked through the signal of the microswitch of the lower limit of the lift and fall mechanism, which keeps a relay activated, which lights up the set light whilst the cycle is being repeated, until the time foreseen in the potentiometer has passed; there is also a hand switch to reset the light when this period of time has passed and no new impulse has been received.

6.- IMPROVEMENTS IN TEMPLATE BORING MACHINES, in accordance with claims 1 to 5, characterised because the circuit has a knob to adjust the bit, which connects a divider which with its high level outlet works on the first multivibrator which activates the relays of the rotating and elevating motors, at the same time as another relay interrupts the motor rotation movement, to make the bit go up without turning, to the top position, where it is stopped, in order to perform the respective setting in the mechanism, until a new pulsation on the adjusting knob, to restart the motor in a downward movement.

7.- IMPROVEMENTS IN TEMPLATE BORING MACHINES, in accordance with claims 1 to 6, characterised because the circuit has automatic activation relays of visual and acoustic means of end of manoeuvre, and state in which the boring machine is found in each case, closely linked with the multivibrators which work on motors, and also on the set lamp integrated inside the unit, before a reflector which concentrates its light beam and directs it on a lens which through a system of angle mirrors, convey that beam to the vertical of the point where the bit is installed.

Fig. 1

Fig. 2

Fig. 3

Fig. 4

EP 0 382 672 A2